# EUROPÄISCHE PATENTANMELDUNG

(11) **EP 1 757 655 A2**
(43) Veröffentlichungstag der Anmeldung: **28.02.2007**
(21) Anmeldenummer: 06016780.6
(22) Anmeldetag: 11.08.2006
(51) Int. Cl.: C08K 5/103, C08L 75/04

(54) **Thermoplastische Polyurethane**

(30) Priorität: 25.08.2005 DE 102005040131
(71) Anmelder: LANXESS Deutschland GmbH, 51369 Leverkusen (DE)
(72) Erfinder: Hansel, Jan-Gerd, Dr., 51069 Köln (DE); Kuckert, Eberhard, Dr., 51375 Leverkusen (DE); Wiedemeier, Melanie, 41540 Dormagen (DE)

(57) **Zusammenfassung**

Weiche, gummielastische, thermoplastische Polyurethane enthaltend eine Mischung aus Trimethylolalkanestern aromatischer Carbonsäuren, Trimethylolalkanestern aliphatischer Carbonsäuren sowie Trimethylolalkanestern sowohl aromatischer als auch aliphatischer Carbonsäuren als Weichmacher, ein Verfahren zu deren Herstellung und deren Verwendung.

## Beschreibung

Die vorliegende Erfindung betrifft weiche, gummielastische, thermoplastische Polyurethane, die eine Mischung aus Trimethylolalkanestern aromatischer Carbonsäuren, Trimethylolalkanestern aliphatischer Carbonsäuren sowie Trimethylolalkanestern sowohl aromatischer als auch aliphatischer Carbonsäuren als Weichmacher enthalten und deren Verwendung.

Thermoplastische Polyurethan-Elastomere, im Folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten lässt sich eine große Variationsbreite mechanischer Eigenschaften erzielen. Eine Übersicht über TPU, ihre Eigenschaften, Herstellung und Anwendungen wird z. B. in Hans-Georg Wussow: "Thermoplastic Elastomers", Ullmann's Encyclopedia of Industrial Chemistry, Electronic Release, 7th ed., chap. 2 "Thermoplastic Polyurethane Elastomers", Wiley-VCH, Weinheim 2004 gegeben.

TPU können kontinuierlich oder diskontinuierlich nach verschiedenen Verfahren hergestellt werden. Als die bekanntesten werden das sogenannte Bandverfahren, zum Beispiel nach GB 1 057 018 A, und das Extruderverfahren, zum Beispiel nach US 3,642,964, auch technisch genutzt.

TPU sind aus linearen Polyhydroxyverbindungen, aromatischen Diisocyanaten und Diolen aufgebaut. Ihre Härte wird über den Gehalt an sogenannter Hartphase, die im wesentlichen aus Diisocyanat-Diol-Segmenten besteht, eingestellt. Durch eine geeignete Wahl der Molverhältnisse der Aufbaukomponenten können TPU mit Härten von Shore A 85 bis Shore D 74 problemlos hergestellt werden. TPU mit einer Shore A-Härte kleiner als 85 können theoretisch zwar auf die gleiche Weise erhalten werden; nachteilig ist jedoch, dass sich die Produkte bei der Herstellung nur schwierig handhaben lassen, da sie äußerst schwer erstarren und fest werden.

Zur Herstellung von TPU-Werkstoffen mit einer Shore A-Härte kleiner als 85 können Weichmacher in härtere TPU eingearbeitet werden. Für diesen Zweck sind häufig Dialkylester der Phthalsäure beschrieben worden. So werden als Weichmacher für TPU in DD 300 900 A7 das Dibutylphthalat und das Diethylphthalat, in EP 0 134 455 A1 (= CA 1 257 946) das Di-(methoxyethyl)-phthalat, in DE 41 12 805 A1 das Di-(methoxyethoxyethyl)-phthalat, und in EP 0 695 786 A1 das Benzylbutylphthalat vorgeschlagen. Das unter den Phthalaten am häufigsten benutzte Benzylbutylphthalat (BBP) stellte sich als fruchtschädigend und möglicher Weise die Fortpflanzung beeinträchtigend heraus. Nach der Richtlinie 2004/73/EG muss BBP ab dem 31. Oktober 2005 entsprechend in Europa gekennzeichnet werden. Dieses Gefährdungspotential schränkt die Anwendbarkeit von Benzylbutylphthalat erheblich ein. Da auch andere Phthalate, wie zum Beispiel Dibutylphthalat oder Di-2-ethylhexylphthalat, möglicherweise negative physiologische Wirkungen besitzen können, besteht ein Bedarf an phthalat- bzw. kennzeichnungsfreien Weichmachern für TPU.

Mit den genannten Weichmachern lassen sich TPU-Zubereitungen mit niedriger Shore A-Härte und guter Kälteflexibilität herstellen. Vorraussetzung für eine unproblematische Verarbeitung ist, dass der Weichmacher eine Säurezahl kleiner als 1 mg KOH/g und eine Viskosität kleiner als 1 000 mPas aufweist. Er sollte die Verarbeitungstemperaturen von 180 bis 220 °C unbeschadet überstehen. Eine weitere wichtige Anforderung ist eine niedrige Flüchtigkeit des Weichmachers. So führt die Flüchtigkeit der Phthalate zum sogenannten Fogging, also der Kondensation von verdampften flüchtigen Bestandteilen aus der Kraftfahrzeug-Innenausstattung an den Glasscheiben, insbesondere an der Windschutzscheibe. Dieses unerwünschte Phänomen kann nach DIN 75 201 B durch die Menge an Foggingkondensat quantifiziert werden. Von zeitgemäßen Werkstoffen für die Kraftfahrzeug-Innenausstattung werden Foggingkondensat-Mengen von kleiner 1 mg gemäß DIN 75 201 B gefordert.

Die Neigung zur Migration des Weichmachers in benachbarte Kunststoffe und die Extrahierbarkeit durch Schmierstoffe oder Lösungsmittel führen außerdem zu einer unerwünschten allmählichen Verhärtung des TPU-Werkstoffs. Insbesondere bei andauernder Belastung durch hohe Temperaturen ist eine Verschlechterung der mechanischen Eigenschaften der weichgemachten TPU zu beobachten. Bei Weichmachern mit unzureichender Verträglichkeit zum TPU kommt es besonders beim Erwärmen zum unerwünschten Ausschwitzen des Weichmachers an der Oberfläche des TPU-Formkörpers. Der Formkörper wird dadurch schmierig und unbrauchbar. Auch bekannte phthalatfreie Weichmacher für TPU, wie zum Beispiel die in EP 0 134 455 A1 beschriebenen Arylphosphate, die in EP 0 695 786 A1 beschriebenen Alkansulfonsäureester des Phenols und das in W. D. Arendt, Elastomerics, 1980, 112 (6), S. 24 bis 33, beschriebene Dipropylenglycoldibenzoat stellen in dieser Hinsicht nur unbefriedigende Lösungen dar.

Die Aufgabe der vorliegenden Erfindung bestand darin, gummielastische TPU-Zubereitungen mit Shore A-Härten von kleiner 85 bereitzustellen, die keine Phthalate enthalten und ein geringeres Fogging aufweisen. Die erhaltenen TPU sollten sich ferner nach bekannten Methoden zu Folien oder Formkörpern verarbeiten lassen, ohne hierbei zu verkleben oder schwer handhabbar zu sein.

Diese Aufgabe konnte nun überraschenderweise durch den Zusatz von ausgewählten Weichmachermischungen in Mengen bis zu 50 Gew.-% zu üblichen TPU gelöst werden.

Gegenstand der vorliegenden Erfindung sind Polyurethanzubereitungen enthaltend 50 - 99 Gew.-% eines Polyurethans und 1 - 50 Gew.-% einer Weichmachermischung enthaltend Trimethylolalkanester aromatischer Carbonsäuren, Trimethylolalkanester aliphatischer Carbonsäurensäuren und Trimethylolalkanester sowie aromatischer als auch aliphatischer Carbonsäuen.

In einer bevorzugten Ausführungsform betrifft die vorliegende Erfindung Polyurethanzubereitungen , wobei das Polyurethan ein thermoplastisches Polyurethan-Elastomer (TPU) ist.

In einer besonders bevorzugten Ausführungsform betrifft die vorliegende Erfindung TPU-Zubereitungen enthaltend
A) 50 - 99 Gew.-% eines TPU, hergestellt aus
   1) organischen Diisocyanaten,
   2) im wesentlichen difunktionellen Polyhydroxyverbindungen mit Molekulargewichten von 500 bis 8 000 g/mol,
   3) Kettenverlängerungsmitteln mit Molekulargewichten von 60 bis 400 g/mol,
   4) gegebenenfalls Hilfsmitteln, Additiven und/oder Füllstoffen, und
B) 1 - 50 Gew.-% einer Weichmachermischung enthaltend Trimethylolalkanester aromatischer Carbonsäuren, Trimethylolalkanester aliphatischer Carbonsäuren sowie Trimethylolalkanester sowohl aromatischer als auch aliphatischer Carbonsäuren als Weichmacher.

Die erfindungsgemäßen Polyurethanzubereitungen bzw. gummielastischen TPU mit einer Shore A-Härte von 80 und weniger, vorzugsweise eines Shore A-Härte von 80 bis 60, besitzen als Basiskunststoff A) vorteilhafterweise thermoplastische Polyurethane mit einer Shore A-Härte von 95 bis 80, vorzugsweise mit einer Shore-A-Härte von 85 bis 80.

Als organische Diisocyanate (1) kommen bevorzugt aliphatische, cycloaliphatische oder aromatische Diisocyanate in Betracht. Besonders bevorzugt wird als aliphatisches Diisocyanat, Hexamethylendiisocyanat eingesetzt. Als cycloaliphatische Diisocyanate werden besonders bevorzugt Isophoron-diisocyanat, 1,4-Cyclohexan-diisocyanat, 1-Methyl-2,4- und -2,6-cyclohexan-diisocyanat sowie deren entsprechende Isomerengemische, 4,4'-, 2,4'- und 2,2'-Dicyclohexylmethan-diisocyanat sowie deren entsprechende Isomerengemische eingesetzt. Als aromatische Diisocyanate werden besonders bevorzugt 2,4-Toluylen-diisocyanat, Gemische aus 2,4 und 2,6-Toluylen-diisocyanat, 4,4'-, 2,4'- und 2,2'-Diphenylmethan-diisocyanat, Gemische aus 2,4'-und 4,4'-Diphenylmethan-diisocyanat, urethanmodifizierte flüssige 4,4'- und/oder -2,4'-Diphenylmethan-diisocyanate, 4,4'-Diisocyanato-diphenylethan-(1,2), 3,3'-Dimethyl-4,4'-biphenyl-diisocyanat, 1,4-Phenylen-diisocyanat oder 1,5-Naphthylen-diisocyanat eingesetzt. Insbesondere bevorzugt werden 1,6-Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethan-diisocyanat und 1,5-Naphthylen-diisocyanat verwendet.

Als im wesentlichen difunktionelle Polyhydroxyverbindungen (2) mit Molekulargewichten von 500 bis 8 000 g/mol eignen sich vorzugsweise Polyetherole und insbesondere Polyesterole. In Betracht kommen jedoch auch hydroxylgruppenhaltige Polymere mit Molekulargewichte von 500 bis 8000 g/mol, beispielsweise Polyacetale, wie Polyoxymethylene und vor allem wasserunlösliche Formale mit den oben genannten Molekulargewichten, z.B. Polybutandiolformal und Polyhexandiolformal, und Polycarbonate, insbesondere solche aus Diphenylcarbonat und 1,6-Hexandiol, erhältlich durch Umesterung. Die genannten Polyhydroxylverbindungen können als Einzelkomponenten oder in Form von Mischungen zur Anwendung kommen.

Geeignete Polyetherole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- und 2,3-Butylenoxid.

Vorzugsweise Anwendung finden Ethylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanol-amine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden Polytetramethylenetherglykole und Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist.

Solche Polyetherole können erhalten werden, indem man z. B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Die im wesentlichen linearen Polyetherole besitzen Molekulargewichte von 500 bis 8 000 g/mol, vorzugsweise 600 bis 6 000 g/mol und insbesondere 1 000 bis 4 000 g/mol. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z. B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Bevorzugte mehrwertige Alkohole sind Glykole mit 2 bis 10, vorzugsweise 2 bis 6 Kohlenstoffatomen, besonders bevorzugt Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie 1,4-Butandiol und/oder 1,6-Hexandiol, Kondensationsprodukte von ω-Hydroxycarbonsäuren, beispielsweise w-Hydroxycapronsäure und vorzugsweise Polymerisationsprodukte von Lactonen, beispielsweise gegebenenfalls substituierten ω-Caprolactonen.

Als Polyesterole werden vorzugsweise Ethandiol-polyadipate, 1,4-Butandiol-polyadipate, Ethandiol-butandiol-1,4-polyadipate, 1,6-Hexandiol-neopentylglykol-polyadipate, 1,6-Hexandiol-1,4-butandiol-polyadipate und Polycaprolactone verwendet.

Die Polyesterole besitzen Molekulargewichte von 500 bis 6 000 g/mol, vorzugsweise von 1 000 bis 4 000 g/mol.

Als Kettenverlängerungsmittel (3) mit Molekulargewichten von 60 bis 400 g/mol, vorzugsweise 60 bis 300 g/mol, kommen vorzugsweise aliphatische Diole mit 2 bis 12 Kohlenstoffatomen, vorzugsweise mit 2, 4 oder 6 Kohlenstoffatomen, besonders bevorzugt Ethandiol, 1,6-Hexandiol, Diethylenglykol, Dipropylenglykol und insbesondere 1,4-Butandiol in Betracht. Geeignet sind jedoch auch Diester der Terephthalsäure mit Glykolen mit 2 bis 4 Kohlenstoffatomen, bevorzugt Terephthalsäure-bis-ethylenglykol oder -1,4-butandiol, Hydroxyalkylenether des Hydrochinons, bevorzugt 1,4-Di-(β-hydroxyethyl)-hydrochinon, (cyclo)aliphatische Diamine, bevorzugt Isophorondiamin, Ethylendiamin, 1,2-, 1,3-Propylendiamin, N-Methyl-1,3-propylendiamin, N,N'-Dimethyl-ethylendiamin oder aromatische Diamine, bevorzugt 2,4- und 2,6-Toluylendiamin, 3,5-Diethyl-2,4- und/oder -2,6-toluylendiamin und primäre ortho-di-, tri- und/oder tetraalkylsubstituierte 4,4'-Diamino-diphenylmethane. Es können auch Gemische der genannten Kettenverlängerungsmittel eingesetzt werden.

Zur Einstellung von Härte und Schmelzpunkt der TPU können die Aufbaukomponenten (2) und (3) in relativ breiten molaren Verhältnissen variiert werden. Bewährt haben sich molare Verhältnisse von Polyhydroxylverbindungen (2) zu Kettenverlängerungsmitteln (3) von 1:1 bis 1:12, insbesondere von 1:1,8 bis 1:4,4, wobei die Härte und der Schmelzpunkt der TPU mit zunehmendem Gehalt an Diolen ansteigt.

Zur Herstellung der TPU werden die Aufbaukomponenten (1), (2) und (3) in Gegenwart von Hilfsmitteln (4) wie z. B. Katalysatoren in solchen Mengen zur Reaktion gebracht, dass das Äquivalenzverhältnis von NCO-Gruppen der Diisocyanate zur Summe der Hydroxylgruppen oder Hydroxyl- und Aminogruppen der Komponenten (2) und (3) 1:0,85 bis 1,20, vorzugsweise 1:0,95 bis 1:1,05 und insbesondere ungefähr 1: 1,02 beträgt.

Geeignete Katalysatoren, welche insbesondere die Reaktion zwischen den NCO-Gruppen der Diisocyanate (1) und den Hydroxylgruppen der Aufbaukomponenten (2) und (3) beschleunigen, sind die nach dem Stand der Technik bekannten und üblichen tertiären Amine, bevorzugt Triethylamin, Dimethylcyclohexylamin, N-Methylmorpholin, N,N'-Dimethyl-piperazin, 2-(Dimethyl-aminoethoxy)-ethanol, Diazabicyclo-[2.2.2]-octan und ähnliche sowie insbesonders organische Metallverbindungen, bevorzugt Titansäureester, Eisenverbindungen, Zinnverbindungen, wie Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch weitere Hilfsmittel, Additive und/oder Füllstoffe (4) zugesetzt werden. Genannt seien beispielsweise Gleitmittel, Inhibitoren, Stabilisatoren gegen Hydrolyse, Licht, Hitze oder Verfärbung, Mikrobiozide, Flammschutzmittel, Farbstoffe, Pigmente, anorganische und/oder organische Füllstoffe, Treibmittel und Verstärkungsmittel.

Nähere Angaben über die obengenannten Hilfsmittel sind der Fachliteratur, zum Beispiel dem Kunststoff-Handbuch, Band 7 "Polyurethane", herausgegeben von G. Oertel, Neuauflage herausgegeben von G. W. Becker und D. Braun, Carl-Hanser-Verlag, München, 3. Auflage 1993, S. 104-127, S. 455-467 oder der DE-OS 29 01 774 zu entnehmen.

Die Weichmachermischung (B) der erfindungsgemäßen TPU enthält mindestens die folgenden Substanzen:
a) Verbindungen der allgemeinen Formel (I), 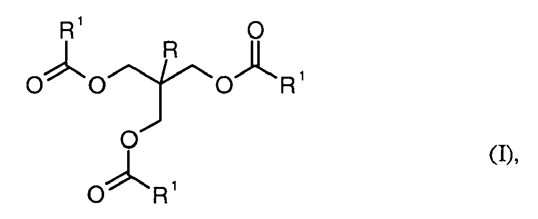 worin
   - R: für H oder eine C₁- bis C₄-Alkylkette steht und
   - R¹: für einen gegebenenfalls mit ein bis drei C₁- bis C₄-Alkylresten substituierten C₆-bis C₁₄-Arylrest steht,
b) Verbindungen der allgemeinen Formel (II), 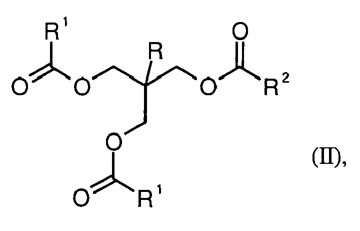 worin
   - R und R¹: die oben genannte Bedeutung haben und
   - R²: für einen geradkettigen oder verzweigten C₇- bis C₂₁-Alkylrest steht,
c) Verbindungen der allgemeinen Formel (III), 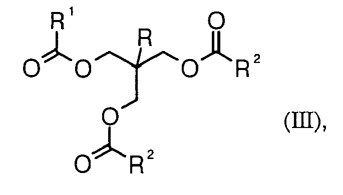 worin
   - R, R¹ und R²: die oben genannten Bedeutungen haben und
d) Verbindungen der allgemeinen Formel (IV), 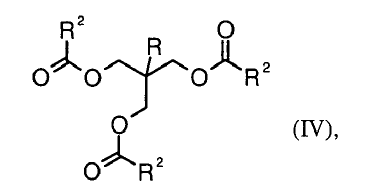
worin
- R und R²: die oben genannten Bedeutungen haben.

Der Rest R leitet sich vorzugsweise von Trimethylolalkanen der allgemeinen Formel (V) ab, 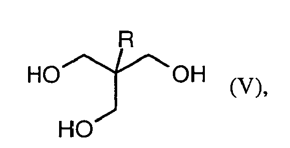 worin
- R: für H oder eine C₁- bis C₄-Alkylkette steht.

Beispiele hierfür sind Trimethylolethan (R = CH₃) oder Trimethylolpropan (R = CH₂CH₃). Die erfindungsgemäßen Estermischungen können Ester von mehreren verschiedenen Trimethylolalkanen enthalten. Besonders bevorzugt leitet sich der Rest R von Trimethylolpropan ab.

Der Rest R¹ leitet sich vorzugsweise von aromatischen Monocarbonsäuren wie Benzoesäure, o-Tolylsäure, m-Tolylsäure, p-Tolylsäure, 4-tert.-Butylbenzoesäure, 1-Naphthoesäure oder 2-Naphthoesäure, insbesondere von Benzoesäure ab.

Der Rest R² leitet sich vorzugsweise von aliphatischen Monocarbonsäuren wie 2-Ethylhexansäure, Caprylsäure, Caprinsäure, Laurinsäure, Myristinsäure, Palmitinsäure, Stearinsäure, Ölsäure, Arachinsäure oder Behensäure, insbesondere von Laurinsäure ab.

Die genannten Substanzen sind in der Weichmachermischung der erfindungsgemäßen TPU bevorzugt in folgenden Gewichtsverhältnissen bezogen auf die gesamte Weichmachermischung enthalten:
a) 1 - 30 Gew.-% einer Verbindung der allgemeinen Formel (I),
b) 10 - 60 Gew.-% einer Verbindung der allgemeinen Formel (II),
c) 10 - 60 Gew.-% einer Verbindung der allgemeinen Formel (III),
d) 1 - 30 Gew.-% einer Verbindung der allgemeinen Formel (IV).

Die genannten Substanzen sind entweder bekannt oder nach bekannten Methoden herstellbar. Zum Beispiel lassen sie sich durch Veresterung der genannten Trimethylolpropane mit den entsprechenden aliphatischen und/oder aromatischen Carbonsäuren herstellen. Diese und weitere Methoden sind dem Fachmann bekannt und zum Beispiel beschrieben in W. Riemenschneider: "Esters, Organic", Ullmann's Encyclopedia of Industrial Chemistry, Electronic Release, 7. Ausgabe, Kap. 5, Wiley-VCH, Weinheim 2004.

Die Weichmachermischung in den erfindungsgemäßen TPU kann durch einfaches Mischen der genannten Substanzen zubereitet werden. Bevorzugt wird sie zubereitet, indem die Synthese der enthaltenen Substanzen und ihre Mischung in einem Arbeitsgang durchgeführt wird. Dieser beinhaltet zum Beispiel die Veresterung eines oder mehrerer Trimethylolalkane mit einer geeigneten Mischung der entsprechenden aliphatischen und aromatischen Carbonsäuren.

Die erfindungsgemäße Weichmachermischung hat vorzugsweise eine Säurezahl von kleiner oder gleich 1 mg KOH/g. Bevorzugt hat sie eine Säurezahl von kleiner oder gleich 0,5 mg KOH/g (Siehe Seite 13).

Neben den genannten Substanzen kann die erfindungsgemäße Weichmachermischung auch weitere Weichmacher wie Monoalkylester der Benzoesäure, Benzoesäurediester von Mono-, Di-, Tri- oder Polyalkylenglycolen, Ester von Monocarbonsäuren mit Polyolen, Dialkylester aliphatischer Dicarbonsäuren, Dialkylester aromatischer Dicarbonsäuren, Trialkylester aromatischer Tricarbonsäuren, Phenylester von Alkansulfonsäuren, Alkyl- oder Arylester der Phosphorsäure, Polyester aus Dicarbonsäuren sowie Mischungen davon enthalten. Bevorzugt können die Kunststoffe Trialkylester aromatischer Tricarbonsäuren als weitere Weichmacher enthalten.

Erfindungsgemäß bevorzugt einzusetzende weitere Weichmacher sind
• die Monoalkylester der Benzoesäure, besonders bevorzugt zum Beispiel Isononylbenzoat,
• die Benzoesäurediester von Mono-, Di-, Tri- oder Polyalkylenglycolen, besonders bevorzugt Propylenglycoldibenzoat, Diethylenglycoldibenzoat, Dipropylenglycoldibenzoat, Triethylenglycoldibenzoat oder Polyethylenglycoldibenzoat und insbesondere Mischungen davon,
• Ester von Monocarbonsäuren mit Polyolen, besonders bevorzugt aus Benzoesäure, Buttersäure und Glycerin erhältliche Veresterungsprodukte, aus Benzoesäure, Laurinsäure und Glycerin erhältliche Veresterungsprodukte, aus Benzoesäure, Laurinsäure und Diethylenglycol erhältliche Veresterungsprodukte, oder aus Benzoesäure, Laurinsäure und Neopentylglycol erhältliche Veresterungsprodukte,
• die Dialkylester aliphatischer Dicarbonsäuren, besonders bevorzugt Di-(2-ethylhexyl)-adipat, Diisononyladipat, Di-(2-ethylhexyl)-sebazat, Di-(2-ethylhexyl)-azelat, Diisononylcyclohexan-1,2-dicarboxylat,
• die Dialkylester aromatischer Dicarbonsäuren, besonders bevorzugt Di-(2-ethylhexyl)-phthalat, Diisononylphthalat, Diisodecylphthalat, Benzylbutylphthalat, Benzylisooctylphthalat, Benzylisononylphthalat,
• die Trialkylester aromatischer Tricarbonsäuren, besonders bevorzugt Trioctyltrimellitat,
• die Phenylester von Alkansulfonsäuren, besonders bevorzugt das Produkt Mesamoll^{®} der LANXESS Deutschland GmbH,
• die Alkyl- oder Arylester der Phosphorsäure, besonders bevorzugt Tri-(2-ethylhexyl)-phosphat, Diphenyl-2-ethylhexyl-phosphat, Diphenylkresylphosphat oder Trikresylphosphat,
• Polyester, besonders bevorzugt Polyester erhältlich aus Dicarbonsäuren wie Adipinsäure oder Phthalsäure und Diolen wie 1,2-Propandiol, 1,3-Butandiol, 1,4-Butandiol oder 1,6-Hexandiol.

Durch den Zusatz der ausgewählten, erfindungsgemäß verwendbaren Weichmacher kann die Härte von üblichen TPU mit Shore A-Werten von beispielsweise 95 bis 80 auf 80 bis 60 gesenkt werden, wobei gleichzeitig die gummielastischen Eigenschaften gegenüber nichtmodifiziertem TPU deutlich verbessert werden. Zusätzlich konnte überraschenderweise ferner der Druckverformungsrest, die bleibende Dehnungswerte und die Rückstellgeschwindigkeit gegenüber nichtmodifzierten TPU verbessert werden.

Die erfindungsgemäß geeignete Weichmachermischung, die vorzugsweise bei 23 °C flüssig ist, und TPU werden in solchen Mengen eingesetzt, dass die gummielastischen TPU eine Shore A-Härte kleiner als 85 besitzen und 1 bis 50 Gew.-Teile, vorzugsweise 3 bis 40 Gew.-Teile und insbesondere 10 bis 40 Gew.-Teile der erfindungsgemäß ausgewählten Weichmachermischung und 99 bis 50 Gew.-Teile, vorzugsweise 97 bis 60 Gew.-Teile und insbesondere 90 bis 60 Gew.-Teile TPU enthalten.

Gegenstand der Erfindung ist auch ein Verfahren zur Herstellung von weichen, gummielastischen TPU-Zubereitungen durch Mischung von 50 - 99 Gew.-% eines TPU mit 1 - 50 Gew.-% einer Weichmachermischung enthaltend Trimethylolalkanester aromatischer Carbonsäuren, Trimethylolalkanester aliphatischer Carbonsäuren sowie Trimethylolalkanester sowohl aromatischer als auch aliphatischer Carbonsäuren bei Temperaturen zwischen 25 und 250 °C.

Die erfindungsgemäß verwendbare, vorzugsweise flüssige Weichmachermischung kann den TPU nach verschiedenen Methoden zugegeben werden. Die Weichmachermischung kann beispielsweise mit den Aufbaukomponenten (1) bis (4), vorzugsweise (2) und/oder (3) gemischt werden, so dass die Herstellung der erfindungsgemäßen TPU in Gegenwart der Weichmacher durchgeführt wird.

Nach einer anderen Verfahrensvariante kann die Weichmachermischung während der Polyurethanherstellung der noch nicht vollständig ausreagierten Reaktionsmischung zugegeben werden.

Besonders bevorzugt wird die erfindungsgemäß verwendbare Weichmachermischung in das ausreagierte, gegebenenfalls granulierte TPU mit einer Shore A-Härte 80 und größer eingebracht. Dabei kann die Weichmachermischung durch Auftrommeln, bevorzugt in einem heizbaren Horizontalmischer, und gleichzeitigem Erwärmen, bevorzugt auf 50 bis 60 °C, granuliertem TPU zugegeben werden. Besonders bevorzugt werden die Weichmacher über die Schmelze mit Hilfe von Extrudern, die gegebenenfalls mit speziellen Vorrichtungen, wie Dosierpumpen ausgestattet sind, bei Temperaturen von 180 bis 220 °C in das TPU eingearbeitet.

Die erfindungsgemäßen TPU finden Verwendung zur Herstellung von Folien und Formkörpern, vorzugsweise Profilen und Röhren. Sie eignen sich insbesondere zur Herstellung von Dichtungsprofilen, z. B. für Fenster- und Türdichtungen, und für Lippendichtungen. Weiterhin lassen sich aus ihnen zum Beispiel Schuhsohlen, Skischuhe, Griffe, Tierohrmarken, Schläuche, Kabelummantelungen, medizinische Artikel und Automobilteile herstellen.

Anhand der nachfolgenden Beispiele wird die Erfindung näher erläutert, ohne dass dadurch eine Einschränkung der Erfindung bewirkt werden soll.

### Beispiele

Die angegebenen Teile beziehen sich auf das Gewicht.

### Eingesetzte Materialien

- Weichmacher:: erfindungsgemäße Weichmachermischung (siehe Beispiel 1) Butylbenzylphthalat (Unimoll^{®} BB der LANXESS Deutschland GmbH) Dipropylenglycoldibenzoat (Benzoflex^{®} 9-88 der Velsicol Corp.) Diphenylkresylphosphat (Disflamoll^{®} DPK der LANXESS Deutschland GmbH) Alkylsulfonsäurephenylester (Mesamoll^{®} der LANXESS Deutschland GmbH)
- TPU:: Polyester-TPU (Desmopan^{®} 385 E der Bayer MaterialScience AG) Polyether-TPU (Desmopan^{®} 9385 der Bayer MaterialScience AG)

### Beispiel 1: Herstellung der Weichmachermischung

268,4 Teile Trimethylolpropan, 439,6 Teile (180 mol-% bezogen auf 100 mol-% Trimethylolpropan) Benzoesäure als aromatische Monocarbonsäure und 480,8 Teile (120 mol-% bezogen auf 100 mol-% Trimethylolpropan) Laurinsäure als aliphatische Monocarbonsäure und 120 Teile Xylol als Schleppmittel wurden in einem Vierhalskolben mit Rührer, Kontaktthermometer, Wasserabscheider, Rückflusskühler und Heizpilz mit Regler unter einem leichten Stickstoffstrom aufgeschmolzen. 3,4 Teile Titan-tetra(isopropylat) wurden als Katalysator zugegeben und die Mischung unter Rühren 25,5 h bei 190 °C gekocht. Nach dieser Zeit hatten sich 103 Teile Wasser abgeschieden. Die flüchtigen Bestandteile wurden innerhalb von 3 h bei 190 °C und 3 mbar entfernt. Das Reaktionsprodukt wurde isoliert und die Zusammensetzung sowie die physikalischen Eigenschaften wurden bestimmt (siehe unten).

### Zusammensetzung der Weichmachermischung

Die Zusammensetzung der Estermischung wurde durch Protonen-NMR-Spektroskopie bestimmt. Dazu wurden die Signale der CH₂-Gruppen der Trimethylolpropan-Reste integriert und aus den Integralen die relativen molaren Anteile der einzelnen Komponenten errechnet. Mithilfe der Molmassen können aus den molaren Anteilen die Gewichtsanteile der Komponenten berechnet werden, die in Tabelle 1 als Gewichtsprozent (Gew.-%) angegeben sind.

**Tabelle 1: Zusammensetzung der Weichmachermischung aus Beispiel 1**

| **Komponente** | **Gew.-%** |
|---|---|
| Trimethylolpropantribenzoat | 17 |
| Trimethylolpropandibenzoatmonolaurat | 42 |
| Trimethylolpropanmonobenzoatdilaurat | 33 |
| Trimethylolpropantrilaurat | 8 |

Tabelle 1 zeigt, dass Estermischungen in der erfindungsgemäßen Zusammensetzung auf einfache Weise nach dem erfindungsgemäßen Herstellverfahren durch geeignete Wahl der Verhältnisse der Ausgangsmaterialien zueinander herzustellen sind.

### Physikalische Eigenschaften der Weichmachermischung

Die wichtigsten physikalischen Daten der erfindungsgemäßen Weichmachermischung wurden nach folgenden Methoden bestimmt:
- Viskosität:: nach DIN 53015 (2001) mittels Höppler-Kugelfallviskosimeter
- Säurezahl:: nach EN ISO 3682 (1998)
- Flüchtigkeit:: Ermittlung des Gewichtsverlustes beim Erhitzen des Weichmachers für 6 h auf 130 °C mit Hilfe eines Brabender H-A-G, E' Feuchtigkeitsbestimmers

Die Ergebnisse werden in Tabelle 2 zusammen mit den Daten der nicht erfindungsgemäßen Vergleichsweichmacher aufgeführt.

**Tabelle 2: Physikalische Eigenschaften der verwendeten Weichmacher**

| **Weichmacher** | **Säurezahl (mg KOH/g)** | **Viskosität mPas (23 °C)** | **Flüchtigkeit (%)** |
|---|---|---|---|
| Weichmachermischung aus Beispiel 1 | < 1,0 | 371 | 0,5 |
| Benzylbutylphthalat (BBP) | < 1,0 | 50 | 1,5 |
| Dipropylenglycol-dibenzoat | < 1,0 | 150 | 1,5 |
| Diphenylkresylphosphat | < 1,0 | 40 | 1,8 |
| Alkylsulfonsäurephenylester | < 1,0 | 100 | 1,4 |

Alle untersuchten Weichmacher zeichnen sich durch Säurezahlen von kleiner als 1 mg KOH/g und Viskositäten von kleiner als 1 000 mPas aus, sind also für die Verwendung in TPU grundsätzlich geeignet. Die erfindungsgemäße Weichmachermischung aus Beispiel 1 ist durch eine besonders niedrige Flüchtigkeit gekennzeichnet.

### Beispiel 2 und Vergleichsbeispiele V1 bis V5: Herstellung der erfindungsgemäßen TPU-Zubereitung als Granulat

Die erfindungsgemäße Weichmachermischung aus Beispiel 1 wurde in den Mengenverhältnissen wie in den Tabellen 3 bis 6 angegeben in eine TPU-Zubereitung eingearbeitet. Zur Herstellung der TPU-Zubereitung wurde ein Extruder Typ Haake (Polylab System); Werkzeug: Doppelschnecke; Geschwindigkeit 100 U/min mit einer Temperatur-Heiz-Zone von 170-180-190-190-185 °C verwendet. Das Extrudat wurde nach dem Abkühlen granuliert. In gleicher Weise wurden ein weichmacherfreies TPU-Granulat sowie TPU-Granulate mit den nicht erfindungsgemäßen Vergleichsweichmachern hergestellt.

### Beispiele 3 bis 11 und Vergleichsbeispiele V6 bis V8: Verarbeitung zu Prüfkörpern

Aus dem Granulat wurden Prüfkörper für die Bestimmung der Shore-Härte A nach DIN 53 505 hergestellt. Zuerst wurde mittels einer Walze (Polymix 80 T; Temperatur 170 °C; Zeit: 10 min) aus dem Granulat ein Walzfell gefertigt. Das Walzfell wurde dann zerkleinert und in eine geeignete Form gefüllt. Mittels einer Presse (Polystab 200 T) wurden bei 175 °C für 10 min die Prüfkörper hergestellt.

Die erhaltenen Prüfkörper wurden im Umluftofen bei 100 °C sieben Tage lang gelagert, um das Ausschwitzverhalten zu überprüfen. Dabei wurde auf die Probekörpern ein Löschblatt gelegt. Nach der Lagerung hatte sich die Kontaktfläche des Papiers bei allen Proben nicht verfärbt. Dies zeigt, dass der Weichmacher nicht wieder an die Oberfläche heraustritt.

### Fogging

Die durch Extrusion hergestellten, weichgemachten TPU-Granulate (Polyether-TPU) wurden zur Bestimmung des Foggingverhaltens gemäß DIN 75201 B untersucht. Tabelle 3 gibt die gemessene Menge Foggingkondensat nach 16 Stunden bei 100 °C wieder.

**Tabelle 3: Fogging-Werte der TPU-Compounds**

| **Beispiel** | **Weichmacher im TPU-Granulat** | **Weichmachermenge** (Teile pro 100 Teile TPU) | **Foggingkondensat** (mg/10g Probe) |
|---|---|---|---|
| **V1** | TPU ohne Weichmacher | 0 | 0,3 |
| **2** | Weichmachermischung aus Beispiel 1 | 30 | 0,3 |
| **V2** | Benzylbutylphthalat | 30 | 8,0 |
| **V3** | Dipropylenglycoldibenzoat | 30 | 24,0 |
| **V4** | Diphenylkresylphosphat | 30 | 3,0 |
| **V5** | Alkylsulfonsäurephenylester | 30 | 9,0 |

Im Vergleich zum weichmacherfreien TPU-Granulat ergibt das erfindungsgemäße TPU-Granulat kein erhöhtes Foggingkondensat. Dies belegt die niedrige Flüchtigkeit, hohe thermische Beständigkeit und gute Verträglichkeit der Weichmachermischung aus Beispiel 1 mit dem TPU. Die Vergleichsweichmacher dagegen verursachen deutlich höhere Mengen an Foggingkondensat.

### Shore-Härte

Die Ergebnisse der Messung der Shore-Härte A nach DIN 53 505 sind in Tabelle 4 (Polyester-TPU) und Tabelle 5 (Polyether-TPU) dargestellt.

**Tabelle 4: Eingesetzte Weichmachermengen bezogen auf 100 Teile TPU und Shore-Härte A der Polyester-TPU-Compounds**

| **Beispiel** | **V6** | **3** | **4** | **5** | **6** | **V7** |
|---|---|---|---|---|---|---|
| TPU (Desmopan^{®} 385 E) | 100 | 100 | 100 | 100 | 100 | 100 |
| Weichmachermischung aus Beispiel | 1 0 | 5 | 20 | 30 | 40 | 0 |
| Benzylbutylphthalat | 0 | 0 | 0 | 0 | 0 | 20 |
| Shore A-Härte | 82 | 77 | 75 | 72 | 67 | 77 |

Die Daten in Tabelle 4 belegen im Vergleich zu Benzylbutylphthalat (Vergleichsbeispiel V7) vergleichbare weichmachende Wirkung der erfindungsgemäßen Estermischung aus Beispiel 1.

**Tabelle 5: Eingesetzte Weiclimachermengen bezogen auf 100 Teile TPU und Shore-Härte A der Polyether-TPU-Compounds**

| **Beispiel** | **V8** | **7** | **8** | **9** | **10** | **11** |
|---|---|---|---|---|---|---|
| TPU (Desmopan^{®} 9385) | 100 | 100 | 100 | 100 | 100 | 100 |
| Weichmachermischung aus Beispiel 1 | 0 | 5 | 10 | 20 | 30 | 40 |
| Shore A-Härte | 85 | 79 | 74 | 71 | 68 | 63 |

Das unbehandelte TPU hat eine Shore-Härte A von 85 (Vergleichsbeispiel V8). Durch Zugabe der Weichmachermischung aus Beispiel 1 wird eine Flexibilisierung erreicht, ohne dass der Weichmacher wieder an die Oberfläche heraustritt.

## Patentansprüche

1. Polyurethanzubereitung enthaltend 50 - 99 Gew.-% eines Polyurethans und 1 - 50 Gew.-% einer Weichmachermischung enthaltend Trimethylolalkanester aromatischer Carbonsäuren, Trimethylolalkanester aliphatischer Carbonsäuren und Trimethylolalkanester sowohl aromatischer als auch aliphatischer Carbonsäuren.

2. Polyurethanzubereitungen gemäß Anspruch 1, **dadurch gekennzeichnet, dass** es sich bei dem Polyurethan um ein thermoplastisches Polyurethan-Elastomer handelt.

3. Polyurethanzubereitungen gemäß Anspruch 2 enthaltend
A) 50 - 99 Gew.-% eines thermoplastischen Polyurethan-Elastomers auf Basis von Polyester- oder Polyetherolen, hergestellt aus
1) organischen Diisocyanaten,
2) im wesentlichen difunktionellen Polyhydroxyverbindungen mit Molekulargewichten von 500 bis 8 000 g/mol, und
3) Kettenverlängerungsmitteln mit Molekulargewichten von 60 bis 400 g/mol, und
B) 1-50 Gew.-% einer Weichmachermischung enthaltend Trimethylolalkanester aromatischer Carbonsäuren, Trimethylolalkanester aliphatischer Carbonsäuren und Trimethylolalkanester sowohl aromatischer als auch aliphatischer Carbonsäuren.

4. Polyurethanzubereitungen gemäß Anspruch 3, **dadurch gekennzeichnet, dass** die Weichmachermischung mindestens
a) eine Verbindung der allgemeinen Formel (I), 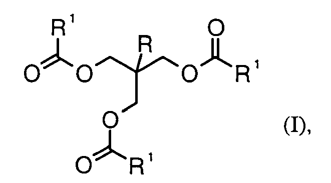 worin
R für H oder eine C₁- bis C₄-Alkylkette steht und
R¹ für einen gegebenenfalls mit ein bis drei C₁- bis C₄-Alkylresten substituierten C₆- bis C₁₄-Arylrest steht,
b) eine Verbindung der allgemeinen Formel (II), 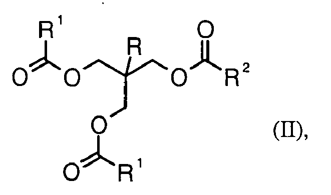 worin
R und R¹ die oben genannte Bedeutung haben und
R² für einen geradkettigen oder verzweigten C₇- bis C₂₁-Alkylrest steht,
c) eine Verbindung der allgemeinen Formel (III), 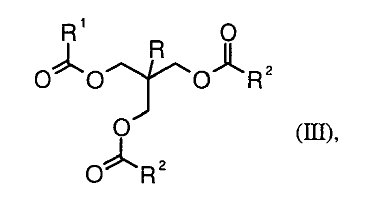 worin
R, R¹ und R² die oben genannte Bedeutung haben und
d) eine Verbindung der allgemeinen Formel (IV), 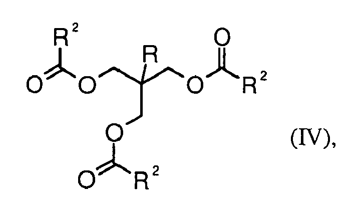
worin
R und R² die oben genannte Bedeutung haben, enthält.

5. Polyurethanzubereitungen gemäß Anspruch 4, **dadurch gekennzeichnet, dass** der Rest R¹ sich von aromatischen Monocarbonsäuren wie Benzoesäure, o-Tolylsäure, m-Tolylsäure, p-Tolylsäure, 4-tert.-Butylbenzoesäure, 1-Naphthoesäure oder 2-Naphthoesäure, insbesondere von Benzoesäure ableitet.

6. Polyurethanzubereitungen gemäß den Ansprüchen 4 und/oder 5, **dadurch gekennzeichnet, dass** der Rest R² sich von aliphatischen Monocarbonsäuren wie 2-Ethylhexansäure, Caprylsäure, Caprinsäure, Laurinsäure, Myristinsäure, Palmitinsäure, Stearinsäure, Ölsäure, Arachinsäure oder Behensäure, insbesondere von Laurinsäure, ableitet.

7. Polyurethanzubereitungen gemäß einem der Ansprüche 4 bis 6, **dadurch gekennzeichnet, dass** der Rest R sich von einem Trimethylolalkan der allgemeinen Formel (V) 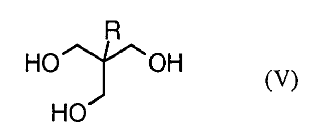 ableitet, worin
R für H oder eine C₁- bis C₄-Alkylkette steht.

8. Polyurethanzubereitungen gemäß einem der Ansprüche 4 bis 7, **dadurch gekennzeichnet, dass** in der Weichmachermischung bezogen auf die gesamte Weichmachermischung
a) 1 - 30 Gew.-% einer Verbindung der allgemeinen Formel (I),
b) 10 - 60 Gew.-% einer Verbindung der allgemeinen Formel (II),
c) 10 - 60 Gew.-% einer Verbindung der allgemeinen Formel (III) und
d) 1 - 30 Gew.-% einer Verbindung der allgemeinen Formel (IV),
enthalten sind und in den Formeln (I) bis (IV) die Reste R, R¹ und R² die in Anspruch 4 genannten Bedeutungen haben.

9. Polyurethanzubereitungen gemäß einem der Ansprüche 2 bis 8, **dadurch gekennzeichnet, dass** sie zusätzlich Hilfsmittel, Additive und/oder Füllstoffe enthalten.

10. Verfahren zur Herstellung der Polyurethanzubereitungen gemäß Anspruch 1, **dadurch gekennzeichnet, dass** 50 - 99 Gew.-% eines Polyurethans, bevorzugt eines thermoplastischen Polyurethan-Elastomers, mit 1 - 50 Gew.-% einer Weichmachermischung enthaltend Trimethylolalkanester aromatischer Carbonsäuren, Trimethylolalkanester aliphatischer Carbonsäuren und Trimethylolalkanester sowohl aromatischer als auch aliphatischer Carbonsäuren bei Temperaturen von 25 bis 250 °C vermischt werden.

11. Verwendung der Polyurethanzubereitungen gemäß der Ansprüche 1 bis 9 zur Herstellung von Folien, Tierohrmarken, Formkörpern, Röhren, Schläuchen, Kabelummantelungen, Profilen, Dichtungen, Schuhbestandteilen und Automobilteilen.
